# EUROPÄISCHE PATENTSCHRIFT

(11) **EP 2 421 627 B1**
(45) Veröffentlichungstag und Bekanntmachung des Hinweises auf die Patenterteilung: **01.10.2014**
(21) Anmeldenummer: 10718484.8
(22) Anmeldetag: 23.04.2010
(51) Int. Cl.: B01D 25/21

(54) **PLATTENBAUTEIL FÜR EIN FILTERPRESSEN-SYSTEM**
PLATE COMPONENT FOR A FILTER PRESS SYSTEM
ÉLÉMENT DE PLAQUE POUR SYSTÈME DE FILTRE-PRESSE

(30) Priorität: 24.04.2009 DE 102009018826
(43) Veröffentlichungstag der Anmeldung: 29.02.2012
(73) Patentinhaber: Klinkau GmbH + Co. KG, 87616 Marktoberdorf-Leuterschach (DE)
(72) Erfinder: ZELLER, Johann, 87647 Oberthingau (DE)
(74) Vertreter: Appelt, Christian W.
(86) Internationale Anmeldenummer: PCT/EP2010/002520
(87) Internationale Veröffentlichungsnummer: WO 2010/121827

(56) Entgegenhaltungen:
- DE-A1- 1 536 870
- DE-A1- 3 825 433
- US-A- 5 484 526

## Beschreibung

Die Erfindung betrifft ein Plattenbauteil für ein Filterpressen-System mit mindestens einer Dichtung. Filterpressen-Systeme mit Plattenbauteilen, wie z.B. einer Filterplatte oder einer Membran, sind grundsätzlich bekannt. In der Regel werden mehrere Plattenbauteile, insbesondere Filterplatten, in einer Filterpresse zusammengespannt, so dass zwischen den einzelnen Plattenbauteilen ein mit Druck beaufschlagbarer Kammerbereich entsteht.

Es ist erforderlich, dass die einzelnen Plattenbauteile, insbesondere Filterplatten und/oder Membranplatten, bei einem Zusammenbau in einem Filterpressen-System gegeneinander abgedichtet werden, so dass kein Druckmittel aus dem Kammerbereich austritt. Hierfür sind Filtertücher oder Dichtungen vorgesehen.

Aus der DE 44 19 865 C1 ist beispielsweise ein Filterpressen-System bekannt, bei dem Filterplatten vorgesehen sind, in die eine Membran eingesetzt werden kann. Zur Abdichtung zweier Bauteile, in der DE 44 19 865 C1 einer Filterplatte einerseits und einer Membran andererseits, sind Dichtungen vorgesehen, die in einer Aufnahmenut aufgenommen sind, wobei die Aufnahmenut entweder in der Membran oder aber in der Filterplatte vorgesehen ist.

Ein weiteres Dichtungssystem des Standes der Technik ist beispielsweise aus der WO 2006/015637 bekannt.

Eine weitere Filterpresse ist aus der US 5,484,526 bekannt, bei der eine Dichtung in einer dafür vorgesehenen Nut eingesetzt ist.

Insbesondere in der Lebensmittelindustrie und der Pharmazie, in der solche Filterpressen-Systeme eingesetzt werden, aber auch bei anderen Einsatzgebieten besteht jedoch das Problem, dass die Produkte, die in den Kammerbereich eingeführt werden, teilweise auch in die Nut für die Dichtung gedrückt werden, was insbesondere zu Verunreinigungen führt. Die Verunreinigungen wiederum senken die Wirksamkeit der Dichtung einerseits und erfordern regelmäßige Reinigungen, wozu die Dichtungen entfernt werden müssen, wobei auch die Reinigung der Nuten aufwendig ist.

Es ist daher eine Aufgabe der vorliegenden Erfindung, ein verbessertes Dichtungssystem zur Verfügung zu stellen.

Diese Aufgabe wird durch ein Plattenbauteil gemäß Anspruch 1 gelöst, die Ansprüche 2 bis 9 betreffen besonders vorteilhafte Ausführungsformen des erfindungsgemäßen Plattenbauteils.

Erfindungsgemäß ist das Plattenbauteil, wobei es sich insbesondere um eine Filterplatte handelt, aus einem ersten Thermoplast-Material hergestellt, wobei das Plattenbauteil mindestens eine Dichtung umfasst, die aus einem zweiten Thermoplast-Material besteht, wobei das zweite Thermoplast-Material in der Regel ein anderes Elastizitätsmodul aufweist als das erste Thermoplast-Material. Übliche Werte für das Elastizitätsmodul liegen zwischen 300 und 1200 N/mm², jedoch können die Werte bei besonderen Ausführungsformen auch darüber oder darunter liegen.

Bei einer besonderen Ausführungsform sind Plattenwerkstoff und Dichtungswerkstoff aus einem identischen Material hergestellt.

Die mindestens eine Dichtung ist fest mit dem Plattenbauteil verbunden, wobei die Dichtung zumindest teilweise in einem Bereich einer, bevorzugt im wesentlichen ebenen, Anlagefläche des Plattenbauteils zur Anlage des Plattenbauteils an ein zweites Bauteil eines Filterpressen-Systems vorgesehen ist und sich zumindest teilweise in einer Richtung senkrecht zur Anlagefläche in das Plattenbauteil bzw. in das Volumen des Plattenbauteils hinein erstreckt. Hierdurch wird ein integrales System, insbesondere ohne Nuten der Zwischenräume, gebildet, so dass keinerlei Verschmutzungen, wie im Zusammenhang mit dem Stand der Technik oben beschreiben, auftreten können. Hierdurch wird auf sehr kostengünstige Weise ein sehr sicheres und zuverlässiges sowie wartungsarmes Filterpressen-System zur Verfügung gestellt, wobei die Wirkung bzw. Effektivität der Dichtung über einem sehr langen Zeitraum erhalten bleibt.

Ein Vorteil der vorliegenden Erfindung ist es, dass Dichtung und Bauteil fest miteinander verbunden sind, ohne Spalte zwischen diesen Elementen zu bilden, in denen sich insbesondere Verschmutzungen festsetzen könnten. Dies ist ein wesentlicher Vorteil gegenüber den Systemen des Standes der Technik, bei denen Dichtungen in der Regel in Nuten eingesetzt werden, wobei dann Dichtungen und Nuten leichter verunreinigen, wobei diese Verunreinigungen schwer zu beseitigen sind.

Bevorzugt sind das Plattenbauteil und die mindestens eine Dichtung so ausgebildet, dass die Dichtung in einer Richtung parallel zur Anlagefläche und aus dem Kammerbereich hinaus zumindest teilweise so an einer Stützfläche des Plattenbauteils anliegt, dass auf die Dichtung ein Gegendruck ausgeübt wird, wenn diese einem Druck, der innerhalb des Kammerbereichs vorliegt, ausgesetzt ist, und so ausgebildet sind, dass ein Ausweichvolumen vorgesehen ist, in das sich Material der Dichtung zumindest teilweise verlagern kann, wenn durch Anlage eines zweiten Bauteils eines Filterpressen-Systems auf die Dichtung Druck in einer Richtung im wesentlichen senkrecht zur Anlagefläche ausgeübt wird, wobei das Ausweichvolumen so ausgebildet und angeordnet ist, dass sich das Material der Dichtung zumindest teilweise in einer Richtung parallel zur Anlagefläche und auf den Kammerbereich zu verlagert.

Mit einer solchen vorteilhaften Ausgestaltung wird für die Dichtung ein Ausweichvolumen zur Verfügung gestellt, in das sich die Dichtung teilweise verlagern kann, so dass eine übermäßige Belastung der Dichtung vermieden wird und damit die Lebensdauer der Dichtung verlängert wird. Das Ausweichvolumen ist dabei ferner so ausgebildet, dass sich das Material der Dichtung zumindest teilweise in einer Richtung parallel zur Anlagefläche und auf den Kammerbereich zu verlagert, was die Dichtwirkung zusätzlich erhöht.

Gemäß der Erfindung sind Plattenbauteil und Dichtung so ausgebildet, dass eine Außenkontur des Systems Plattenbauteil und Dichtung im Bereich der Dichtung "stetig" verläuft, wobei unter dem Begriff "stetig" zu verstehen ist, dass die Außenkontur im Bereich der Dichtung und bei den Übergängen Dichtung/Plattenbauteil, insbesondere Dichtung/Anlagefläche des Plattenbauteils keine Kanten oder Sprünge aufweist, vielmehr geradlinig oder kurvenförmig verläuft. Hierdurch wird eine gleichmäßige Oberfläche zur Verfügung gestellt, so dass ebenfalls auf besonders vorteilhafte Weise vermieden wird, dass die oben genannten im Stand der Technik problematischen Verunreinigungen auftreten.

Ferner ist das System Dichtung /Plattenbauteil bevorzugt so ausgebildet, dass eine Außenkontur im Bereich der Dichtung so ausgebildet ist, dass in Richtung senkrecht zur Anlagefläche des Plattenbauteils keine Hinterschneidungen bzw. Räume auftreten, die in einer Richtung senkrecht zur Anlagefläche auch nur teilweise abgedeckt sind. Auch so wird auf besonders vorteilhafte Weise vermieden, dass Verunreinigungen, wie oben beschrieben, auftreten, wobei gleichzeitig eine hohe Dichtwirkung erzielt werden kann.

Bei einer besonders bevorzugten Ausführungsform ist die mindestens eine Dichtung in einem Eckbereich oder Kantenbereich des Plattenbauteils ausgebildet, wobei ferner bevorzugt das Ausweichvolumen im Bereich des mit Druck beaufschlagbaren Kammerbereichs liegt.

Besonders bevorzugt ist die mindestens eine Dichtung dabei so ausgebildet, dass sie in einem unbelasteten Zustand in einer Richtung senkrecht zur Anlagefläche des Plattenbauteils zumindest teilweise über die durch die Anlagefläche gebildete Ebene hinausragt. Auch hierdurch wird eine besonders hohe Dichtwirkung erzielt.

Bevorzugt erstreckt sich eine solche Erhöhung in einer Richtung senkrecht zur Anlagefläche nur über einen Teil der Längserstreckung in einer Richtung parallel zur Anlagefläche des Plattenbauteils vor, bevorzugt beispielsweise über eine Erstreckung von maximal 70%, besonders bevorzugt maximal 50% der Erstreckung in einer Richtung parallel zur Anlagefläche.

Gemäß einer bevorzugten Ausführungsform besteht die Dichtung aus einem zweiten Thermoplast-Material, das einen niedrigeren Elastizitätsmodul aufweist als das erste Thermoplast-Material des Plattenbauteils. Hierdurch wird eine Dichtung zur Verfügung gestellt, die weicher ist, so dass sie auf Druck nachgiebiger reagiert, wobei bei den üblichen Anwendungsfällen eine besonders gute Dichtwirkung sichergestellt wird. Es ist jedoch auch möglich, dass das zweite Thermoplast-Material einen höheren Elastizitätsmodul oder denselben Elastizitätsmodul aufweist wie das erste Thermoplast-Material des Plattenbauteils.

Die mindestens eine Dichtung besteht bevorzugt aus einem Thermoplast oder einem thermoplastischen Elastomer. Als Werkstoff dafür kommen insbesondere in Frage:
- thermoplatische Elastomere auf Olefinbasis
- vernetzte thermoplastische Elastomere auf Olefinbasis,
- thermoplastische Elastomere auf Urethanbasis
- thermoplastische Copolyester
- Styrol Blockcopolymere
- thermoplastische Copolyamide.

Als Plattenwerkstoffe eignen sich insbesondere Thermoplaste, die mit den Dichtungswerkstoffen verschweißt oder fugenlos verklebt werden können.

Bevorzugt ist die mindestens eine Dichtung fest mit dem Plattenbauteil verschweißt, wobei es sich hier um ein sehr kostengünstig und zuverlässiges Herstellungsverfahren handelt, so dass auch die Gesamtherstellungskosten des Plattenbauteils gesenkt werden.

Diese und weitere Merkmale und Vorteile der Erfindung werden anhand der nachfolgenden schematischen Abbildungen, die als Teil-Querschnitts-Abbildungen dargestellt sind, im Detail erläutert. Es zeigen:
- **Fig. 1**: eine erste Ausführungsform eines erfindungsgemäßen Plattenbauteils,
- **Fig. 2**: zwei erfindungsgemäße Plattenbauteile, wie sie in Fig. 1 gezeigt sind, wobei ein erstes Plattenbauteil auf ein zweites Plattenbauteil mit Druck aufgesetzt ist, wie es in einem Betriebszustand der Fall wäre, und
- **Fig. 3**: eine zweite Ausführungsform eines erfindungsgemäßen Plattenbauteils.

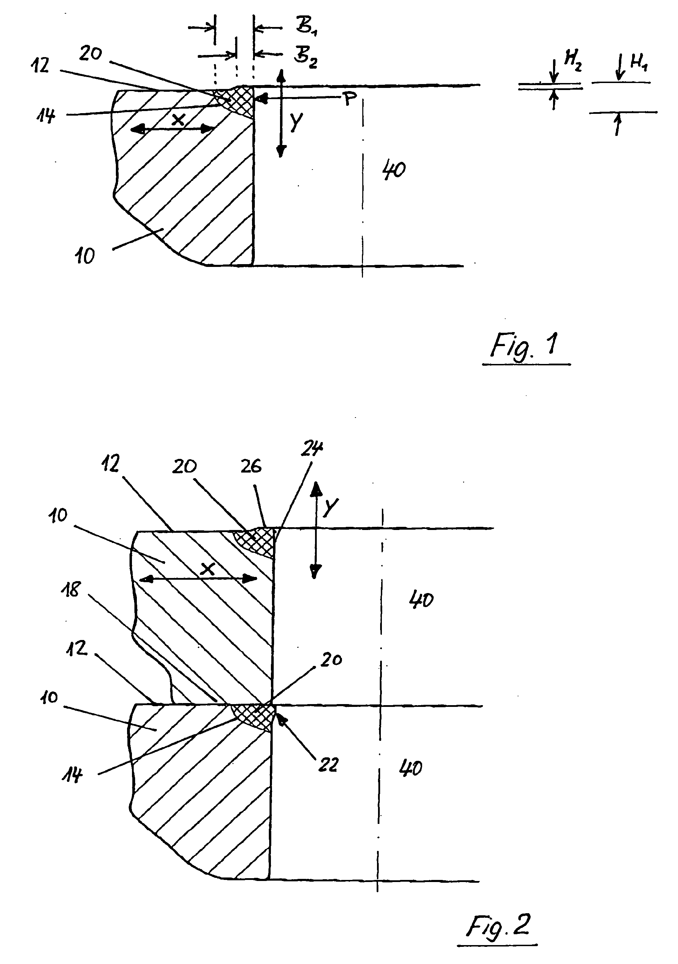

Fig. 1 zeigt eine erste Ausführungsform eines erfindungsgemäßen Plattenbauteils, nämlich einer Filterplatte 10 für ein Filterpressen-System, wobei die Filterplatte 10 aus einem ersten Thermoplast-Material, bei dieser Ausführungsform aus Polypropylen hergestellt ist. Die Filterplatte 10 umfasst in einem Randbereich eine im wesentlichen umlaufende Dichtung 20 aus einem zweiten Thermoplast-Material, bei dieser Ausführungsform thermoplastisches Elastomer auf Olefinbasis, wobei die Dichtung 20 fest mit der Filterplatte 10 verschweißt oder verklebt ist, so dass in einem Betriebszustand und in Zusammenwirken mit mindestens einem zweiten Bauteil eines Filterpressen-Systems ein mit Druck beaufschlagbarer Kammerbereich 40 abgedichtet werden kann.

Wie gut in Fig. 1 ersichtlich ist, ist die Dichtung 20 in einem Rand- oder Eck-Bereich der Filterplatte 10 vorgesehen, wobei die Filterplatte 10 eine im wesentlichen ebene Anlagefläche 12 zur Anlage eines zweiten Plattenbauteils (in Fig. 1 nicht gezeigt, siehe Fig. 2) und eine Stützfläche 14 umfasst, die so ausgebildet ist, dass auf die Dichtung 20 ein Gegendruck ausgeübt wird, wenn diese einem Druck, der innerhalb des Kammerbereichs 40 vorliegt, ausgesetzt ist, also in den Fig. 1 und 2 einem Druck ausgesetzt ist, der im wesentlichen von rechts nach links auf eine Innenfläche 24 der Dichtung ausgeübt wird. Ein solcher Druck ist mit dem Pfeil P schematisch dargestellt.

In einer Richtung X parallel zur Anlagefläche 12 der Filterplatte 10 erstreckt sich die Dichtung 20 über eine Breite B₁, wobei sie darüber hinaus über eine Breite B₂ mit einer Erhöhung 26 ausgebildet ist, die sich über die Ebene der Anlagefläche 12 hinaus erstreckt.

Die Höhe H₂ dieser Erhöhung 26 über die Ebene der Anlagefläche 12 der Filterplatte 10 hinaus beträgt bei dieser Ausführungsform ungefähr 15% der maximalen Höhe H₁ der Dichtung in eine Richtung Y senkrecht zur Anlagefläche 12. Es soll jedoch darauf hingewiesen werden, dass die Höhe H₂ durchaus variieren kann, sie liegt bevorzugt in einem Bereich von 5% bis 30% der Höhe H₁, insbesondere bevorzugt 5% bis 15% der Höhe H₁.

In Fig. 2 sind zwei Filterplatten 10 gezeigt, wie sie in Zusammenhang mit Fig. 1 beschrieben worden sind, es wird daher auf die obige Beschreibung Bezug genommen. Eine obere Filterplatte 10 ist dabei auf eine untere Filterplatte 10 aufgesetzt, wobei eine untere Seite oder untere Anlagefläche 18 der oberen Filterplatte 10 auf die Anlagefläche 12 der unteren Filterplatte 10 aufgesetzt ist.

Wie gut in Fig. 2 ersichtlich wird durch die obere Filterplatte 10 ein Druck auf die Dichtung 20 der unteren Filterplatte 10 ausgeübt, so dass sich durch die Elastizität der Dichtung 20 das Material dieser Dichtung zumindest teilweise in ein Ausweichvolumen verlagert, nämlich in eine Richtung zumindest teilweise parallel zur Anlagefläche 12 und in Richtung auf den Kammerbereich 40 zu, also in Fig. 2 im wesentlichen von links nach rechts. Dieser Bereich ist mit dem Bezugszeichen 22 in Fig. 2 versehen. Wie ebenfalls gut in Fig. 2 ersichtlich ist, sorgt die Stützfläche 14 der Filterplatte 10 dafür, dass auf das Material der Dichtung 20 ein Gegendruck ausgeübt wird, wenn diese einem Druck, der innerhalb des Kammerbereichs 40 vorliegt, ausgesetzt ist, was sicherstellt, dass das Material der Dichtung 20 im Betriebszustand in Richtung auf den Druck in dem Kammerbereich "vorgespannt" ist, so dass eine sehr hohe Dichtwirkung erzielt wird.

Durch das Vorsehen eines Ausweichvolumens wird dabei sichergestellt, dass durch die Druckbeaufschlagung keine übermäßig hohen Belastungen auf das Dichtungsmaterial ausgeübt wird, so dass eine lange Lebensdauer der Dichtung sichergestellt ist.

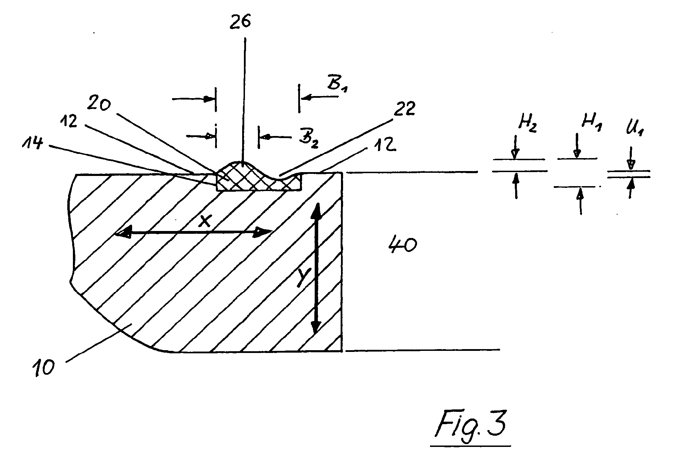

Fig. 3 zeigt eine zweite Ausführungsform eines erfindungsgemäßen Plattenbauteils, wobei es sich auch hier um eine Filterplatte 10 handelt. Die Filterplatte 10 besteht aus einem ersten Thermoplast-Material, bei dieser Ausführungsform aus Polypropylen, wobei die Dichtung 20 aus einem zweiten Thermoplast-Material besteht, bei dieser Ausführungsform aus thermoplastischem Elastomer auf Olefinbasis.

Wie gut aus Fig. 3 ersichtlich ist, verläuft die Außenkontur des Systems Filterplatte/Dichtung, insbesondere Anlagefläche/Dichtung im Bereich der Dichtung, also im oberen Bereich in Fig. 3, "stetig". In Fig. 3 von links kommend verläuft die Anlagefläche 12 zuerst eben, wobei dann im Bereich der Dichtung 20 die Dichtung einen kurvenförmigen Verlauf nimmt, wobei der Übergang Anlagefläche 12 zur Dichtung 20 stetig, also ohne Kante verläuft. Auf der linken Seite, bezugnehmend auf die Darstellung in Fig. 3, umfasst die Dichtung 20 eine Erhöhung 26, während sie im darauffolgenden rechten Bereich abfällt, so dass ein Ausweichvolumen, mit dem Bezugszeichen 22 versehen, zur Verfügung gestellt wird. Der Kurvenverlauf der Außenkontur mit der Dichtung 20 setzt sich fort und geht dann, erneut stetig, in die Anlagefläche 12 über.

Eine maximale Gesamthöhe der Dichtung in einer Richtung Y senkrecht zur Anlagefläche 12 beträgt H₁, wobei der Bereich der Erhöhung 26 eine maximale Höhe H₂ über der Anlagefläche 12 aufweist. Die maximale Tiefe der Dichtung 20 unterhalb einer Ebene der Anlagefläche 12 zur Erzeugung des Ausweichvolumens beträgt U₁.

Bevorzugt beträgt bei dieser Ausführungsform die Höhe H₂ etwa 5% bis 30% der Höhe H₁, bevorzugt etwa 5% bis 15% der Höhe H₁, bei einer besonders bevorzugten Ausführungsform ca. 10% der Höhe H₁. Der Betrag der Vertiefung oder Absenkung U₁ der Dichtung unter das Niveau der durch die Anlagefläche 12 gebildeten Ebene beträgt bevorzugt ebenfalls etwa 5% bis 30% der Höhe H₁, besonders bevorzugt etwa 5% bis 15% der Höhe H₁ und insbesondere bevorzugt etwa 10% der Höhe H₁.

Bei einer bevorzugten Ausführungsform ist die Dichtung 20 so ausgebildet, dass der Bereich des Volumens der Dichtung, der sich über die Ebene der Anlagefläche 12 hinaus erstreckt, in etwa dem Volumen der Ausnehmung bzw. der Absenkung der Dichtung unterhalb der Ebene, die durch die Anlagefläche 12 gebildet wird, entspricht. Besonders bevorzugt ist das Volumen der Ausnehmung maximal 20% größer oder kleiner als das Volumen der Erhebung über die Anlagefläche 12 hinaus, besonders bevorzugt maximal 10% größer oder kleiner.

Die Breite B₂, über die sich die Dichtung 20 über eine Ebene, die von der Anlagefläche 12 gebildet wird, hinaus erstreckt, beträgt bei dieser Ausführungsform etwa die Hälfte der Gesamtbreite B₁ der Dichtung. B₂ wird vorzugsweise bei 20% bis 50% von B₁ liegen, wobei in Sonderfällen auch Werte darüber oder darunter möglich sind, beispielsweise bis maximal 70% oder maximal 80% von B₁.

Es soll an dieser Stelle darauf hingewiesen werden, dass es bei dieser oder einer ähnlichen Ausführungsform bevorzugt ist, dass der Bereich der Erhöhung 26 der Dichtung 20 auf der dem Druckraum abgewandten Seite angeordnet ist, das Ausweichvolumen daher zwischen dem Bereich der Erhöhung 26 und dem Kammerbereich 40 liegt, so dass sich das Material der Dichtung in einem Betriebszustand, d.h. bei Anlage eines zweiten Bauteils, in eine Richtung zumindest teilweise parallel zur Anlagefläche und auf den Kammerbereich zu verlagern kann.

## Patentansprüche

1. Plattenbauteil (10) für ein Filterpressen-System aus einem ersten Thermoplast-Material mit mindestens einer Dichtung (20) aus einem zweiten Thermoplast-Material zum Abdichten eines mit Druck beaufschlagbaren Kammerbereichs (40), wobei die Dichtung (20) fest mit dem Plattenbauteil (10) verbunden ist,
wobei die Dichtung (20) zumindest teilweise in einem Bereich einer Anlagefläche (12) des Plattenbauteils (10) zur Anlage des Plattenbauteils (10) an ein zweites Bauteil eines Filterpressen-Systems vorgesehen ist und sich zumindest teilweise in eine Richtung (Y) senkrecht zur Anlagefläche (12) von der Anlagefläche in das Plattenbauteil (10) hinein erstreckt,
**dadurch gekennzeichnet, dass**
eine Aussenkontur des Systems Plattenbauteil (10) und Dichtung (20) im Bereich der Dichtung stetig verläuft, wobei die Dichtung (20) mit dem Plattenbauteil (10) verschweißt oder fugenlos verklebt ist.

2. Plattenbauteil (10) nach Anspruch 1, wobei das zweite Thermoplast-Material einen anderen Elastizitätsmodul aufweist als das erste Thermoplast-Material,

3. Plattenbauteil (10) nach Anspruch 1 oder 2 , wobei das Plattenbauteil (10) und die mindestens eine Dichtung (20) so ausgebildet sind, dass die Dichtung (20) in einer Richtung (X) parallel zur Anlagefläche (12) und in einer Richtung aus dem Kammerbereich (40) hinaus zumindest teilweise so an einer Stützfläche (14) des Plattenbauteils (10) anliegt, dass auf die Dichtung (20) ein Gegendruck ausgeübt wird, wenn diese einem Druck, der innerhalb des Kammerbereichs (40) vorliegt, ausgesetzt ist.

4. Plattenbauteil (10) nach einem der vorhergehenden Ansprüche, wobei das Plattenbauteil (10) und die mindestens eine Dichtung (20) so ausgebildet sind, dass ein Ausweichvolumen (22) vorgesehen ist, in das sich Material der Dichtung (20) zumindest teilweise verlagern kann, wenn durch Anlage eines zweiten Bauteils eines Filterpressen-Systems Druck auf die Dichtung (20) in einer Richtung im wesentlichen senkrecht zur Anlagefläche (12) ausgeübt wird, wobei das Ausweichvolumen so ausgebildet und angeordnet ist, dass sich zumindest ein Teil des Materials der Dichtung zumindest teilweise in eine Richtung parallel zur Anlagefläche (12) und auf den Kammerbereich (40) zu verlagern kann.

5. Plattenbauteil (10) nach einem der Ansprüche 1 bis 4, **dadurch gekennzeichnet, dass** das zweite Thermoplast-Material einen niedrigeren Elastizitätsmodul aufweist als das erste Thermoplast-Material.

6. Plattenbauteil (10) nach einem der Ansprüche 1 bis 4, **dadurch gekennzeichnet, dass** das zweite Thermoplast-Material einen höheren oder gleichen Elastizitätsmodul aufweist als das erste Thermoplast-Material.

7. Plattenbauteil (10) nach einem der vorhergehenden Ansprüche, **dadurch gekennzeichnet, dass** die Dichtung (20) aus einem thermoplastischen Elastomer besteht.

8. Plattenbauteil (10) nach einem der vorhergehenden Ansprüche, **dadurch gekennzeichnet, dass** das Plattenbauteil (10) eine Filterplatte ist.

9. Plattenbauteil (10) nach einem der Ansprüche 1 bis 8, **dadurch gekennzeichnet, dass** das Plattenbauteil (10) eine Membran ist.

## Claims

1. A plate component (10) for a filter press system of a first thermoplastic material with at least one seal (20) of a second thermoplastic material for purposes of sealing a chamber region (40) to which pressure can be applied, wherein the seal (20) is permanently connected with the plate component (10), wherein
the seal (20) is provided at least partially in a region of a placement surface (12) of the plate component (10) for purposes of placing the plate component (10) on a second component of a filter press system, and extends at least partially, in a direction (Y) at right angles to the placement surface (12), from the placement surface into the plate component (10),
**characterised in that**
an outer contour of the system comprising plate component (10) and seal (20) runs in a continuous manner, wherein the seal (20) is welded to, or is adhesively bonded seamlessly with, the plate component (10).

2. The plate component (10) in accordance with Claim 1, wherein the second thermoplastic material has a modulus of elasticity that differs from that of the first thermoplastic material.

3. The plate component (10) in accordance with Claim 1 or 2, wherein the plate component (10) and the at least one seal (20) are designed such that, in a direction (X) parallel to the placement surface (12) and in a direction away from the chamber region (40), the seal (20) is at least partially seated on a supporting surface (14) of the plate component (10) such that a counter-pressure is exerted onto the seal (20) if the latter is exposed to a pressure that is present within the chamber region (40).

4. The plate component (10) in accordance with one of the preceding claims, wherein the plate component (10) and the at least one seal (20) are designed such that a displacement volume (22) is provided, into which material of the seal (20) can at least partially be displaced, if, as a result of the placement of a second component of a filter press system, pressure is exerted onto the seal (20) in a direction essentially at right angles to the placement surface (12), wherein the displacement volume is designed and arranged such that at least a part of the material of the seal can at least partially be displaced in a direction parallel to the placement surface (12) and onto the chamber region (40).

5. The plate component (10) in accordance with one of the Claims 1 to 4, **characterised in that** the second thermoplastic material has a modulus of elasticity that is lower than that of the first thermoplastic material.

6. The plate component (10) in accordance with one of the Claims 1 to 4, **characterised in that** the second thermoplastic material has a modulus of elasticity that is higher than, or equal to, that of the first thermoplastic material.

7. The plate component (10) in accordance with one of the preceding claims, **characterised in that** the seal (20) consists of a thermoplastic elastomer.

8. The plate component (10) in accordance with one of the preceding claims, **characterised in that** the plate component (10) is a filter plate.

9. The plate component (10) in accordance with one of the Claims 1 to 8, **characterised in that** the plate component (10) is a membrane.

## Revendications

1. Élément en forme de plaque (10) pour un système de filtre-presse, réalisé dans un premier matériau thermoplastique et comportant au moins un joint d'étanchéité (20) réalisé dans un deuxième matériau thermoplastique et destiné à rendre étanche une partie de chambre (40) pouvant être alimentée en pression, ledit joint d'étanchéité (20) étant relié de manière fixe à l'élément en forme de plaque (10),
ledit joint d'étanchéité (20) étant prévu au moins en partie dans une zone d'une surface d'appui (12) de l'élément en forme de plaque (10) permettant d'appuyer l'élément en forme de plaque (10) contre un deuxième élément d'un système de filtre-presse, et s'étendant au moins partiellement dans une direction (Y) perpendiculaire à la surface d'appui (12) depuis la surface d'appui vers l'intérieur de l'élément en forme de plaque (10),
**caractérisé en ce que**
un contour extérieur du système constitué de l'élément en forme de plaque (10) et du joint d'étanchéité (20) s'étend en continu dans la zone du joint d'étanchéité, ledit joint d'étanchéité (20) étant soudé ou collé de manière lisse à l'élément en forme de plaque (10).

2. Élément en forme de plaque (10) selon la revendication 1, dans lequel le deuxième matériau thermoplastique possède un module d'élasticité différent de celui du premier matériau thermoplastique.

3. Élément en forme de plaque (10) selon la revendication 1 ou 2, dans lequel l'élément en forme de plaque (10) et ledit au moins un joint d'étanchéité (20) sont réalisés de telle sorte que le joint d'étanchéité (20) est en appui au moins en partie contre une surface de support (14) de l'élément en forme de plaque (10) dans une direction (X) parallèle à la surface d'appui (12) et dans une direction sortant de la partie de chambre (40), de telle sorte qu'une contre-pression est exercée sur le joint d'étanchéité (20) lorsque celui-ci est exposé à une pression qui règne à l'intérieur de la partie de chambre (40).

4. Élément en forme de plaque (10) selon l'une quelconque des revendications précédentes, dans lequel l'élément en forme de plaque (10) et ledit au moins un joint d'étanchéité (20) sont réalisés de telle sorte qu'il est prévu un volume de substitution (22), dans lequel le matériau du joint d'étanchéité (20) peut être déplacé au moins en partie lorsque, sous l'effet de l'appui d'un deuxième élément d'un système de filtre-presse, une pression est exercée sur le joint d'étanchéité (20) dans une direction sensiblement perpendiculaire à la surface d'appui (12), le volume de substitution étant configuré et disposé de telle sorte qu'au moins une partie du matériau du joint d'étanchéité peut être déplacée au moins en partie dans une direction parallèle à la surface d'appui (12) et vers la partie de chambre (40).

5. Élément en forme de plaque (10) selon l'une quelconque des revendications 1 à 4, dans lequel le deuxième matériau thermoplastique possède un module d'élasticité inférieur à celui du premier matériau thermoplastique.

6. Élément en forme de plaque (10) selon l'une quelconque des revendications 1 à 4, dans lequel le deuxième matériau thermoplastique possède un module d'élasticité supérieur ou identique à celui du premier matériau thermoplastique.

7. Élément en forme de plaque (10) selon l'une quelconque des revendications précédentes, **caractérisé en ce que** le joint d'étanchéité (20) est réalisé dans un élastomère thermoplastique.

8. Élément en forme de plaque (10) selon l'une quelconque des revendications précédentes, **caractérisé en ce que** l'élément en forme de plaque (10) est une plaque de filtre.

9. Élément en forme de plaque (10) selon l'une quelconque des revendications 1 à 8, **caractérisé en ce que** l'élément en forme de plaque (10) est une membrane.
